# EUROPEAN PATENT SPECIFICATION

(11) **EP 3 714 674 B1**
(45) Date of publication and mention of the grant of the patent: **06.09.2023**
(21) Application number: 19165986.1
(22) Date of filing: 28.03.2019
(51) Int. Cl.: A01D 41/127, A01F 12/32

(54) **STRAW WALKER LOAD MONITORING**
STROHSCHÜTTLERLASTÜBERWACHUNG
SURVEILLANCE DE LA CHARGE D'UN SECOUEUR DE PAILLE

(43) Date of publication of application: 30.09.2020
(73) Proprietor: CNH Industrial Belgium NV, 8210 Zedelgem (BE)
(72) Inventor: Tallir, Frederik, 8600 Esen (Diksmuide) (BE); Missotten, Bart M.A., 3020 Herent (BE); Mahieu, Thomas, 9000 Ieper (BE); Jongmans, Dré W.J., 4791 AG Klundert (NL); Baert, Matthias, 8310 Assebroek (BE); Aesaert, Glenn, 8870 Izegem (BE)
(74) Representative: CNH Industrial IP Department

(56) References cited:
- EP-A1- 1 470 749
- US-A1- 2003 199 291
- US-A1- 2017 248 453
- US-B2- 7 048 627

## Description

### FIELD OF THE INVENTION

The present invention relates to a combine harvester and a method of controlling a combine harvester.

### BACKGROUND OF THE INVENTION

Combine harvesters, also commonly called 'combines', harvest grain from the field and separate the grain kernels from all the other material in the harvested crop. This other material is commonly named 'material other than grain' or MOG and comprises, e.g., straw, leaves, ears and chaff. This separation involves different process stages. In a threshing step, the grain kernels are separated from the chaff and the plant. A consecutive separation stage further separates the straw and other larger parts in the grain-MOG mixture from the smaller grain kernels and the chaff. Then, a cleaning stage, typically comprising a blower for blowing away the light-weight chaff and a set of reciprocating sieves for letting through the heavier grain kernels, separates the grains from the chaff.

Threshing and separation stages come in different mechanical setups. In a conventional combine, the threshing is done by a rotating, transversely placed threshing drum. Underneath the threshing drum, a threshing concave, also called threshing grate, is provided at a short distance (the threshing gap) from the rotor. The threshing drum typically comprises a number of transversely placed threshing slats that cooperate with the threshing concave to release the grain kernels from the crop. Similarly, a separation concave, also called separation grate, extends under and about a transversely placed separation drum, leaving a separation gap in between. Usually, separation fingers or other separation elements on the surface of the separation drum cooperate with the separation grate to further separate the grain kernels from the straw. In advanced combines, the threshing and separation stages may comprise one or more additional drums positioned in parallel with the threshing and separation drums. In a very simple conventional combine harvester, the separation drum may be dispensed with. It is noted that although all drums and grates in the threshing and separation stages may be optimised for their respective specific functions, threshing drums will typically also provide for separation and vice versa.

From the threshing and separation drums, the straw is passed on to the straw walkers. The reciprocating back and forth movement of the straw walkers moves the straw to the rear of the combine where it may be dropped onto the field in a swath or cut and dispersed by a shredder-spreader combination. The reciprocating movement of the straw walkers further causes the heavier grain kernels to fall down through the straw volume that is carried to the rear of the combine. The straw carrying top surface of the straw walkers is also a grate and allows grain kernels that have not yet fallen through the threshing and separation grates to fall down and be led to the cleaning stage of the machine. Because of the grain separation function of the straw walkers, the straw walker section may be considered to be a part of the separation section.

When harvesting at high capacity, the threshing and separation drums and the straw walkers have to process large amounts of crop at high speeds. In order to minimize the amount of grain kernels that remain unthreshed, combine harvesters operating at high capacity will typically use a more aggressive threshing and separation process. Threshing aggressiveness may also be adjusted in dependence to crop type and/or crop conditions. For example, greener and moister grain is harder to thresh than less green and dryer grain. A disadvantage of aggressive threshing is that it does not only lead to increased threshing and separation, but also to damaged straw. While damaged straw may be a problem in itself, when the straw is to be collected in bales and used for feeding cattle, it also increases the load on the straw walkers. Undamaged straw leads to a more airy and voluminous mat of straw on the straw walkers, making it easier for the grain kernels to fall through the straw volume. Aggressive threshing leads to more straw breakage and shorter straws. The shorter straw forms a denser straw mat through which makes it more difficult for the straw walkers to effectively separate the grain kernels from the straw. As a result, grains may leave the combine at the rear end and fall on the field.

In order to avoid such grain loss, it is known to place grain loss sensors at the rear end of the straw walkers. Such grain loss sensors are typically impact sensors that can detect grain kernels falling of the rear end of the straw walkers. When such grain loss is detected or exceeds some lower threshold, the combine harvester may slow down or threshing and separations settings may be adjusted to bring the grain loss back to an acceptable level. A disadvantage of this method of detecting grain loss is that the combine control system can only react when it is already too late and grain is being lost.

It is an object of the present invention to provide a solution to at least some of the problems mentioned above and it is against this background that the present invention has been developed.

US2017/248453 A1 describes a sensor unit for use in the multiphase flow of a harvesting machine.

### SUMMARY OF THE INVENTION

According to the invention this object is achieved by providing a method of controlling a combine harvester as defined in claim 1 comprising the steps of receiving grain flow sensor signals from a plurality of grain flow sensors, based on the received grain flow sensor signals, determining a current load on a straw walker section, and based on the current load, adjusting an aggressiveness setting of a threshing and separation section of the combine harvester. The grain flow sensors are provided underneath and adjacent to a crop transfer surface of the straw walker section of the combine harvester and are distributed over a length of the straw walker section.

With the method according to the invention, it becomes possible to monitor the straw walker load continuously and to adjust the threshing and separation settings before actual grain losses occur. It is further possible to strike an optimal balance between lowering straw walker load, improving straw quality and avoiding grain loss.

It is noted that in the US patent application published as US 2003 199291 A1, a combine harvester with so-called 'separation sensors' positioned along the length of the straw walkers is already disclosed. However, the monitoring system described therein is not configured for monitoring the straw walker load. In US 2003 199291 A1, the same separation sensors are also provided under the threshing and separation drums and are only used to monitor the total amount of grain that falls onto the sieves of the cleaning stage and to calculate the total grain loss with a higher accuracy than was possible before. Because this document only provides an improved way of calculating grain loss, it is only capable of adjusting threshing and separation settings after the increased grain loss has been detected and does not allow to pre-emptively adjust the threshing and separation process in order to avoid grain loss.

Preferably, the determining of the current load comprises determining a grain flow profile, representing a variation of the grain flow sensor signals along the length of the straw walker section. Alternatively, control decisions are made based on, e.g., absolute grain flow values at different locations along the length of the straw walkers and/or based on ratios of grain flow values at different locations. Control decisions may also be based on detected sudden and/or undesired changes in any such values.

When the straw walker load level is low, the grain flow sensors at the front of the straw walker section will record a significant flow of grain through the crop transfer surface of the straw walkers. Most separation occurs in the front area of the straw walkers. While the straw is moved to the rear of the straw walkers, fewer and fewer grain kernels remain. Consequently, grain flow sensor signals from the rear grain flow sensors will be significantly lower than those from the front of the straw walker section.

When straw walker load increases because the straw mat becomes denser, the grain flow sensor signals from the sensors at the front go down. Since more grain kernels are carried further rearward, grain flow sensor signals at the rear may increase and the overall front-to-rear grain flow profile flattens. Because this flattening of the grain flow profile already occurs before the actual grain loss starts increasing, it is now possible to adapt the threshing and separation settings at an earlier stage, before it is too late. With the method according to the invention, it may even be possible to completely prevent the increase in grain loss.

In the event that the grain flow profile indicates that the threshing and separating system is approaching its limits and grain loss can be expected to occur soon, additional measures may be taken to prevent grain loss. For example, the ground speed of the combine harvester may be reduced in order to lower the throughput and allow the threshing and separating system to process all incoming crop at a less than maximum aggressiveness level. Similar measures may be taken in the event of a sudden and large change to the grain flow profile.

Adjusting the aggressiveness setting comprises adjusting a rotational speed of a threshing drum, a beater and/or a separation drum. Generally, faster drum rotation leads to more aggressive threshing and separation. Usually, the rotational speeds of the different drums are directly linked and controlled together. When the combine harvester allows for it, the rotational speeds of the different drums may be controlled independently.

Alternatively or additionally, adjusting the aggressiveness setting comprises adjusting a threshing gap between a threshing drum and a cooperating threshing grate and/or a separation gap between a separation drum and a cooperating separation grate. The smaller the gaps, the more aggressive the threshing and/or separation process.

In addition to adjusting the aggressiveness setting of the threshing and separation section, also the separation performance of the straw walker section can be adjusted, e.g. by adjusting the speed or the slope of the straw walkers. Such adjustments have already been used for compensating for variation in slope on hilly terrain, but can, according to the current invention, also be useful for adjusting to straw walker load variations that are not exclusively caused by changes in slope.

In an embodiment of the method for controlling a combine harvester according to the invention, a closed loop control process is used. The control process includes determining a first current load level, reducing the aggressiveness setting of the threshing and separation section, determining a second current load level, and then comparing the second current load level to the first current load level. If the second current load level is substantially lower than the first current load level, the aggressiveness setting of the threshing and separation section is further reduced and the monitoring is resumed or continued. If the second current load level is substantially equal to the first current load level, the aggressiveness setting of the threshing and separation section is maintained. This way, it is possible to find the most aggressive threshing and separation settings that still lead to a relatively low straw walker load and optimal straw quality. Since a further reduction of the threshing and separation aggressiveness will not further lower the straw walker load or increase the straw quality, there is no need to further adapt the threshing and separation process and run the risk of increased grain losses.

In a similar way, the control method may be adapted to find the least aggressive threshing and separation setting that does not lead to an increase of grain loss.

According to another aspect of the invention, a system according to claim 10 is provided for controlling a combine harvester. The system comprises grain flow sensors provided underneath and adjacent to a crop transfer surface of a straw walker section of the combine harvester and a controller, operatively coupled to the grain flow sensors for receiving grain flow sensor signals therefrom. The grain flow sensors are distributed over a length of the straw walker section. The controller is configured perform the methods according to the invention.

Straw walkers usually comprise about five or six parallel straw walker modules, the reciprocating movement of neighbouring modules being out of phase. Each module comprises a grate-like crop transfer surface below which a gutter is provided for leading the grains back to the front of the combine harvester where it can be dropped onto the front portion of the cleaning section. Preferably, the grain flow sensors are provided inside the gutters and over the whole width of the straw walker section, i.e. in each one of the straw walker modules.

The grain flow sensors may, e.g., comprise an impact sensor, a pressure sensor and/or a light based sensor. The impact sensors may, e.g., be a piezo-electric plate based sensor or a detection rod, coupled to a torque sensor. Detection rods have the advantage that they are smaller and don't affect the grain flow as much as the larger plate based sensors do.

Pressure sensors generally measure pressure differences between two points, which pressure differences provide information about the amount of crop material present at the location of the sensors. In addition to the pressure sensors positioned just underneath the crop transfer surface of the straw walkers, may be provided at corresponding longitudinal and/or transverse positions above the straw walker section.

Light sensors may, e.g., use LED or laser based light emitters and corresponding receivers. Light may be emitted from the left hand side and/or the right-hand side of a straw walker module and received by a corresponding receiver at the other side. Alternatively, the emitter and receiver are provided as an integrated unit and the light is reflected at the other side of the straw walker module before it is detected by the receiver. A ratio of the emitted and the received light can be used as a measure for the amount of grain flowing through the crop transfer surface.

In addition to the grain flow sensors, a straw quality sensor may be provided above and/or adjacent to a rear end of the straw walker section, the controller further being operatively coupled to the straw quality sensor for receiving a straw quality signal therefrom and being configured to adjust the aggressiveness setting of the threshing and separation section based on a combination of the current load and the straw quality sensor signal. Using information about the straw quality may be advantageous, because it allows the system to provide an optimal balance between aggressive threshing and separation to release all grain kernels from the crop and gentler threshing and separation to maintain straw quality.

The straw quality sensor may, e.g., comprise a camera, an ultrasound sensor, a laser sensor and/or a radar sensor. The camera may use visible and/or infrared light for. Depending on the technology that is used, the best results may be obtained by sensors that are provided inside the combine harvester, above the straw walkers, or by sensors monitoring the straw as it leaves the combine and is dropped onto the field. Of course, combinations of different types of sensors may be used for even more reliable measurements.

In some embodiments, also an unthreshed grain sensor may be provided, the controller further being operatively coupled to the unthreshed grain sensor for receiving an unthreshed grain signal therefrom and being configured to adjust the aggressiveness setting of the threshing and separation section based on a combination of the current load and the unthreshed grain signal. High amounts of unthreshed grain indicate that the threshing process may have to be more aggressive in order to make sure that no grain is unnecessarily lost.

According to a further aspect of the invention, a combine harvester is provided comprising a threshing and separation section, a straw walker section and one of the systems for controlling a combine harvester as described above.

It will be appreciated that preferred and/or optional features of the first aspect of the invention may be combined with the other aspects of the invention. The invention in its various aspects is defined in the independent claims below and advantageous features are defined in the dependent claims below.

### BRIEF DESCRIPTION OF THE DRAWINGS

For a better understanding of the invention, some embodiments of the invention will now be described with reference to the following drawings, in which:
Figure 1 shows a combine harvester in which the invention may be advantageously used.
Figure 2 schematically shows a control scheme of the threshing and separation section of the combine harvester of figure 1.
Figure 3 shows a top view of the straw walker section of the combine harvester of figure 1.
Figure 4 shows a flow diagram of a possible control method according to the invention.
Figure 5 shows a flow diagram of a closed loop control process making use of the invention.

### DETAILED DESCRIPTION

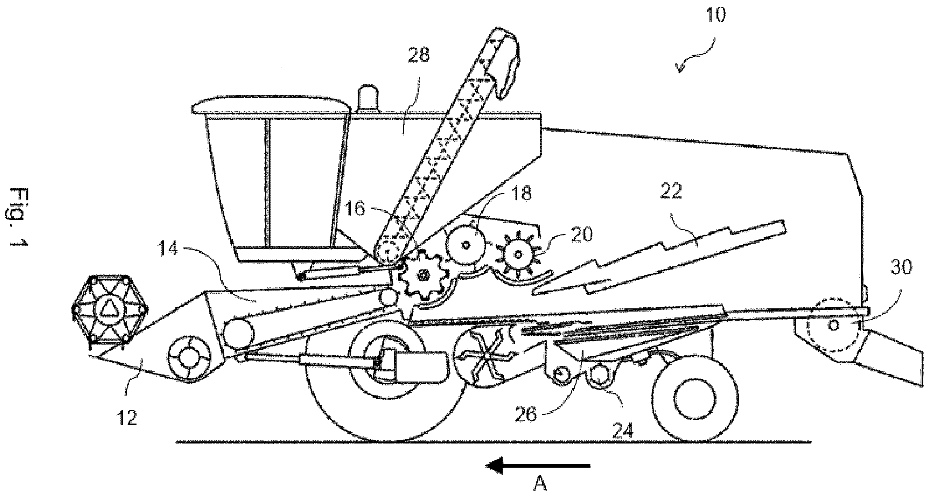

Figure 1 shows a combine harvester 10 in which the invention may be advantageously used. When harvesting crops, the harvester 10 travels in a forward direction indicated by the arrow A. Typically, a header 12 with a horizontal cutter bar for harvesting grain or a plurality of picking units for harvesting corn cuts the crop and moves it into the combine harvester 10 via an inlet opening of a feeder 14. The feeder 14 transports the harvested crop rearward to a threshing and separation section. In this exemplary combine harvester 10, the threshing and separation section comprises a threshing drum 16, a beater 18 and a separation drum 20, all transversely place in the combine harvester chassis. However, in other combine harvesters, the threshing and separation section may comprise more, less or different components.

The overall function of the threshing and separation section is to separate grain kernels from the ears of the harvested crop, to drop the separated grain kernels and part of the chaff onto a cleaning section 26 and to pass the remain and large parts of the harvested crop, such as straw and threshed corn cobs, on to subsequent straw walker section 22. In relation to combine harvesters, all crop material other than grain is often referred to as MOG, i.e. material other than grain. Most of the MOG volume consists of straw and ears, but also chaff is considered MOG.

The reciprocating movement of the straw walker section 22 causes the crop material coming from the threshing and separation section to be moved further rearward. During the transport over the straw walker section 22, remaining grain kernels that have not been fully separated from the larger plant material yet, fall through openings in the crop transfer surface of the straw walker section 22 and are led to the cleaning section 26 too. All plant material reaching the rear end of the straw walker section 22 may be dropped on the floor in a swath behind the combine harvester 10 or is chopped by a straw chopper 30 before being spread over the field.

The cleaning section 26 typically comprises one or more reciprocating sieves and a fan for blowing the chaff away while letting the grain kernels fall through openings in the sieves. After having made its way down through the sieves, the grain is collected and transported to a large grain tank 28 on top of the combine harvester 10. The chaff that is blown over the rear end of the sieves falls on the floor or is spread over that field by a chaff spreader (not shown). Any unthreshed ears that may have ended up on the sieve surfaces are heavier than the chaff and fall directly off the sieve end, allowing for them to be collected in and threshed by an unthreshed grain processor 24.

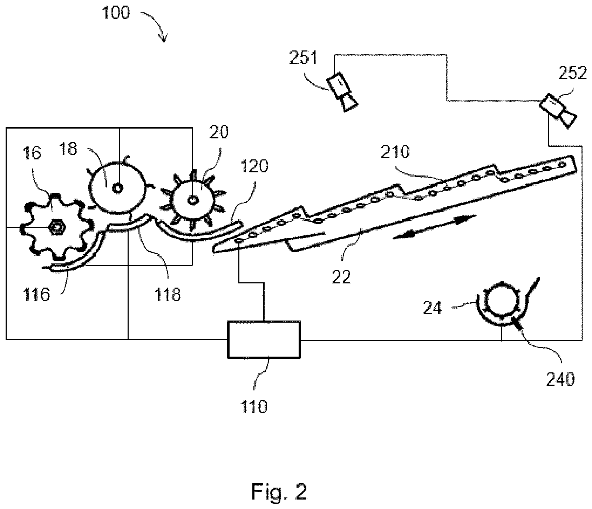

Figure 2 schematically shows a control scheme of the threshing and separation section of the combine harvester of figure 1. It also shows the threshing and separation section, the straw walker section 22 and the unthreshed grain processor 24 in a slightly enlarged and more detailed view.

The threshing drum 16 typically consists of a rotating shaft or drum with a plurality of threshing slats at its outer circumferential surface. The threshing drum 16 operates in cooperation with a threshing grate 116 that is placed just under the threshing drum 16 to form a threshing gap therebetween. The harvested crop, coming from the feeder 14 is threshed between the threshing grate 116 and the rotating slats of the threshing drum 16. The aggressiveness of the threshing depends on the speed of rotation of the threshing drum 16, the size of the threshing gap and the shape, orientation and surface structure of the threshing slats and the threshing grate 116. All of these aspects may be controllable by suitable control mechanisms controlled by a central controller 110. For example, the aggressiveness of the threshing process can be increased by decreasing the threshing gap, increasing the rotational speed of the threshing drum 16 or increasing the aggressiveness of the threshing grate surface. The latter may be accompanied by a further opening of the threshing grate 116, thereby allowing more material to fall down through the threshing grate 116 onto the cleaning section 26.

The beater 18 is typically smaller than the threshing drum 16 and also rotates above a grate 118 that allows grain to fall through while pushing the general crop flow further in the direction of the separator 20. The beating elements at the outer circumference of the beater 18, may again be slats, but may take other forms. In addition to keeping the crop flowing, the beater 18 also functions to beat not yet completely threshed grain kernels out of their ears. Also the beater aggressiveness can be altered by adjusting its rotational speed, the gap towards the cooperating beater grate 118 and/or the shape and orientation of the beater grate 118 and the beating elements.

The separator drum 20 does typically not comprise slats, but uses separation fingers for raking through the grain-MOG mixture in order to separate the two and allow the grain to fall down through a separation grate 120, in the direction of the cleaning section 26. The aggressiveness of the separation section can also be adjust by adjusting its rotational speed, the gap towards the cooperating separation grate 120 and/or the shape and orientation of the separation grate 120 and the separator fingers. The aggressiveness of the different parts of the threshing and separation section can be controlled separately or simultaneously and in mutual coordination.

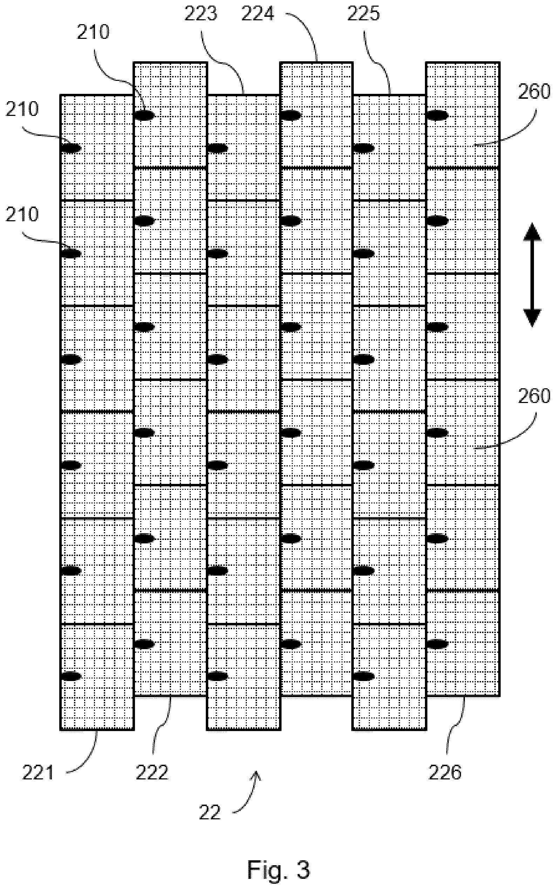

Figure 3 shows a top view of the straw walker section 22 of the combine harvester 10 of figure 1. The straw walker section 22 comprises a number of straw walker modules 221-226 that are driven in a reciprocating motion in parallel with the driving direction and the longitudinal axis of the combine harvester 10. While the frequency of the reciprocating motion is usually the same for all modules 221-226, their phases may be different, which is visualised here by showing three of the modules 221, 223, 225 in a different longitudinal position than the other three modules 222, 224, 226. Each straw walker module 221-226 has a crop transfer surface 260 that carries the grain-MOG mixture that is received from the separator drum 20 and 'walks' it rearward to the back of the combine harvester 10. The reciprocating motion of the straw walker modules 221-226 causes the smaller heavier grain kernels to fall down through the grain-MOG mixture and through openings in the crop transfer surface 260. Gutters provided under the open crop transfer surface 260 collect the falling grain kernels and guide them back to the forward end of the straw walker section, where they are dropped onto the cleaning system 26.

According to the invention, a plurality of grain flow sensors 210 is provided underneath and adjacent to the crop transfer surface 260 of the straw walker modules 221-226. The grain flow sensors 210 are operatively coupled to the controller 110 for sending the grain flow sensor signals thereto. The grain flow sensors 210 are distributed over a length of the straw walker section 22 to enable obtaining a detailed grain flow pattern indicating how much grain is separated from the straw and other MOG at each location of the straw walker section 22.

Preferably, the grain flow sensors 210 are provided inside the gutters of the individual straw walker modules 221-226, just below the crop transfer surface. Preferably, the grain flow sensors 210 are located such that they can provide reliable measurements, without disturbing the flow of grain towards the cleaning section 26. The grain flow sensors 210 may, e.g., comprise an impact sensor, a pressure sensor and/or a light based sensor. The impact sensors may, e.g., be a piezo-electric plate based sensor or a detection rod, coupled to a torque sensor. Detection rods have the advantage that they are smaller and don't affect the grain flow as much as the larger plate based sensors do. Pressure sensors generally measure pressure differences between two points, which pressure differences provide information about the amount of crop material present at the location of the sensors. In addition to the pressure sensors positioned just underneath the crop transfer surface 260 of the straw walker modules 221-226, may be provided at corresponding longitudinal and/or transverse positions above the straw walker section 22. Light sensors may, e.g., use LED or laser based light emitters and corresponding receivers. Light may be emitted from the left hand side and/or the right-hand side of a straw walker module 221-226 and received by a corresponding receiver at the other side. Alternatively, the emitter and receiver are provided as an integrated unit and the light is reflected at the other side of the straw walker module 221-226 before it is detected by the receiver. A ratio of the emitted and the received light can be used as a measure for the amount of grain flowing through the crop transfer surface 260.

In addition to the grain flow sensors 210, a straw quality sensor may be provided above and/or adjacent to a rear end of the straw walker section 22. The straw quality sensor may, e.g., comprise a camera 251, 252, an ultrasound sensor, a laser sensor and/or a radar sensor. The camera 251, 252 may use visible and/or infrared light for. Depending on the technology that is used, the best results may be obtained by sensors that are provided inside the combine harvester 10, above the straw walkers, or by sensors monitoring the straw as it leaves the combine harvester 10 and is dropped onto the field. Of course, combinations of different types of sensors may be used for even more reliable measurements.

The controller 110 is operatively coupled to the straw quality sensor for receiving a straw quality signal therefrom and configured to adjust the aggressiveness setting of the threshing and separation section based on a combination of the current load and the straw quality sensor signal. Using information about the straw quality may be advantageous, because it allows the system to provide an optimal balance between aggressive threshing and separation to release all grain kernels from the crop and gentler threshing and separation to maintain straw quality.

In some embodiments, also an unthreshed grain sensor 240 may be provided and coupled to the controller 110. An unthreshed grain signal may then be used for adjusting the aggressiveness setting of the threshing and separation section based on a combination of the current load and the unthreshed grain signal. High amounts of unthreshed grain indicate that the threshing process may have to be more aggressive in order to make sure that no grain is unnecessarily lost. The unthreshed grain sensor 240 may, e.g., measure a volume or weight of the material going through the unthreshed grain processor directly. Alternatively, the amount of unthreshed grain is measured indirectly by measuring a physical load on the unthreshed grain processor 24.

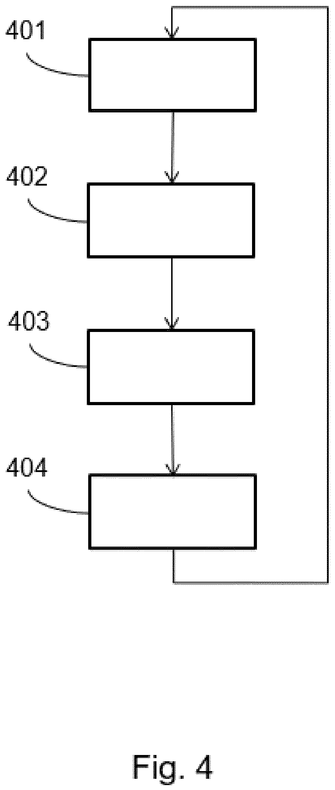

Figure 4 shows a flow diagram of a possible control method according to the invention. This method is controlled by the controller 110 of the control system 100 of figure 2. It uses sensor readings from the grain flow sensors 210, the straw quality sensors 251, 252 and the unthreshed grain sensor 240 as input and based thereon determines control signals for the threshing and separation section.

The control method starts with an input step 401 for receiving grain flow sensor signals from a plurality of grain flow sensors 210. Based on the received grain flow sensor signals, the controller 110 determines a current load on the straw walker section 22 in load determination step 402. The current load is then used as input for determining if the aggressiveness of the threshing and separation section is to be adjusted, and if so to what extent, in an aggressiveness calculation step 403. Then in actuation step 404, an aggressiveness setting of the threshing and separation section of the combine harvester 10 may be adjusted. When the adjustments have been made, the controller 110 preferably returns to the input step 401 and continues monitoring and processing the incoming grain flow sensor signals.

In addition to the grain flow sensor signals, the controller 110, in input step 401, may also receive straw quality signals. Although the straw walker load is already a good measure for straw quality, additional more direct measurements of straw quality may further improve the accuracy and reliability of the control method. When the optimal aggressiveness setting is determined in step 403, the additional straw quality signals may be used for finding an even better balance between preventing grain loss and maximising straw quality.

With the method illustrated by the flow diagram of figure 4, it is possible to monitor the straw walker load continuously and to adjust the threshing and separation settings before actual grain losses occur. It is further possible to strike an optimal balance between lowering straw walker load, improving straw quality and avoiding grain loss. The load determination step 402 may comprise determining a grain flow profile, representing a variation of the grain flow sensor signals along the length of the straw walker section 22. Alternatively, control decisions are made based on, e.g., absolute grain flow values at different locations along the length of the straw walkers and/or based on ratios of grain flow values at different locations. Control decisions may also be based on detected sudden and/or undesired changes in any such values.

When the straw walker load level is low, the grain flow sensors 210 at the front of the straw walker section record a significant flow of grain through the crop transfer surface 260 of the straw walker modules 221-226. Most separation occurs in the front area of the straw walker section 22. While the straw is moved to the rear of the straw walker section 22, fewer and fewer grain kernels remain. Consequently, grain flow sensor signals from the rear grain flow sensors 210 will be significantly lower than those from the front of the straw walker section 22.

When straw walker load increases because the straw mat becomes denser, the grain flow sensor signals from the sensors 210 at the front go down. Since more grain kernels are carried further rearward, grain flow sensor signals at the rear may increase and the overall front-to-rear grain flow profile flattens. Because this flattening of the grain flow profile already occurs before the actual grain loss starts increasing, it is now possible to adapt the threshing and separation settings at an earlier stage, before it is too late. With the method according to the invention, it may even be possible to completely prevent the increase in grain loss.

As already described above, adjusting the aggressiveness setting comprises adjusting a rotational speed of a threshing drum 16, a beater 18 and/or a separation drum 20. Generally, faster drum rotation leads to more aggressive threshing and separation. Usually, the rotational speeds of the different drums are directly linked and controlled together. When the combine harvester allows for it, the rotational speeds of the different drums may be controlled independently. Alternatively or additionally, adjusting the aggressiveness setting comprises adjusting a threshing gap between a threshing drum 16 and a cooperating threshing grate 116 and/or a separation gap between a separation drum 20 and a cooperating separation grate 120. The smaller the gaps, the more aggressive the threshing and/or separation process.

In addition to adjusting the aggressiveness setting of the threshing and separation section, also the separation performance of the straw walker section 22 can be adjusted, e.g. by adjusting the speed or the slope of the straw walkers. Such adjustments have already been used for compensating for variation in slope on hilly terrain, but can also be useful for adjusting to straw walker load variations that are not exclusively caused by changes in slope.

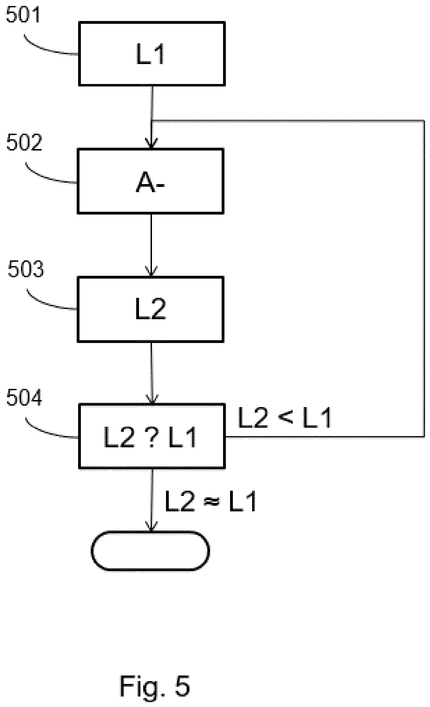

An advanced method for controlling a combine harvester 10 is schematically shown in figure 5. This method can be used for finding the right aggressiveness settings for optimising straw quality without causing unnecessary grain loss. The closed loop control process shown there includes determining a first current straw walker load level (step 501), reducing the aggressiveness setting of the threshing and separation section 22 (step 502), determining a second current straw walker load level (step 503), and then comparing the second current load level to the first current load level. If the second current load level is substantially lower than the first current load level, the aggressiveness setting of the threshing and separation section is further reduced (back to step 502) and the monitoring is resumed or continued. If the second current load level is substantially equal to the first current load level, the optimal aggressiveness setting of the threshing and separation section is found and no further adaptations of the threshing and separation section are needed.

This way, it is possible to find the most aggressive threshing and separation settings that still lead to a relatively low straw walker load and optimal straw quality. Since a further reduction of the threshing and separation aggressiveness will not further lower the straw walker load or increase the straw quality, there is no need to further adapt the threshing and separation process and run the risk of increased grain losses.

The method of figure 5 thus aims for minimal grain loss, without compromising on straw quality. In a similar way, the control method may be adapted to find the least aggressive threshing and separation setting that does not lead to an increase of grain loss. Such a method will lead to optimal straw quality, without compromising on grain loss.

Many modifications may be made to the specific examples described above without departing from the scope of the invention as defined in the accompanying claims.

## Claims

1. A method of controlling a combine harvester (10), the method comprising:
receiving grain flow sensor signals from a plurality of grain flow sensors (210) provided underneath and adjacent to a crop transfer surface of a straw walker section (22) of the combine harvester (10), the grain flow sensors (210) being distributed over a length of the straw walker section (22),
based on the received grain flow sensor signals, determining a current load on the straw walker section (22), and
based on the current load, adjusting an aggressiveness setting of a threshing and separation section (16, 18, 20) of the combine harvester (10), **characterised in that** the method further comprises:
determining that the current load is above an upper threshold and wherein the adjusting of the aggressiveness setting of the threshing and separation section (16, 18, 20) of the combine harvester (10) comprises
reducing a rotational speed of a threshing drum (16), a beater (18) and/or a separation drum (20), and/or
increasing a threshing gap between the threshing drum (16) and a cooperating threshing grate (116) and/or a separation gap between the separation drum (20) and a cooperating separation grate (120).

2. A method for controlling a combine harvester (10) as claimed in claim 1, wherein the determining of the current load comprises determining a grain flow profile, representing a variation of the grain flow sensor signals along the length of the straw walker section (22).

3. A method for controlling a combine harvester (10) as claimed in claim 1 or 2, wherein the adjusting of the aggressiveness setting comprises adjusting a rotational speed of a threshing drum (16), a beater (18) and/or a separation drum (20).

4. A method for controlling a combine harvester (10) as claimed in any one of the preceding claims, wherein the adjusting of the aggressiveness setting comprises adjusting a threshing gap between a threshing drum (16) and a cooperating threshing grate (116) and/or a separation gap between a separation drum (20) and a cooperating separation grate (120).

5. A method for controlling a combine harvester (10) as claimed in any one of the preceding claims, further comprising adjusting a speed and/or a slope of the straw walker section (22) based on the current load.

6. A method for controlling a combine harvester (10) as claimed in any one of the preceding claims, further comprising:
receiving a straw quality sensor signal from a straw quality sensor provided above and/or adjacent to a rear end of the straw walker section (22),
adjusting the aggressiveness setting of the threshing and separation section (16, 18, 20) based on a combination of the current load and the straw quality sensor signal.

7. A method for controlling a combine harvester (10) as claimed in any one of the preceding claims, further comprising:
receiving an unthreshed grain sensor signal from an unthreshed grain sensor,
adjusting the aggressiveness setting of the threshing and separation section (16, 18, 20) based on a combination of the current load and the unthreshed grain sensor signal.

8. A method for controlling a combine harvester (10) as claimed in any one of the preceding claims, further comprising determining that the current load is below a lower threshold and wherein the adjusting of the aggressiveness setting of the threshing and separation section (16, 18, 20) of the combine harvester (10) comprises
increasing a rotational speed of a threshing drum (16), a beater (18) and/or a separation drum (20), and/or
reducing a threshing gap between the threshing drum (16) and a cooperating threshing grate (116) and/or a separation gap between the separation drum (20) and a cooperating separation grate (120).

9. A method for controlling a combine harvester (10) as claimed in any one of the preceding claims, further comprising
determining a first current load level,
reducing the aggressiveness setting of the threshing and separation section (16, 18, 20),
determining a second current load level,
comparing the second current load level to the first current load level and
further reducing the aggressiveness setting of the threshing and separation section (16, 18, 20) if the second current load level is substantially lower than the first current load level,
maintaining the aggressiveness setting of the threshing and separation section (16, 18, 20) if the second current load level is substantially equal to the first current load level.

10. A system (100) for controlling a combine harvester (10), the system comprising:
grain flow sensors (210) provided underneath and adjacent to a crop transfer surface of a straw walker section (22) of the combine harvester (10), the grain flow sensors (210) being distributed over a length of the straw walker section (22),
a controller (110), operatively coupled to the grain flow sensors (210) for receiving grain flow sensor signals therefrom, and configured
to determine a current load on the straw walker section (22) based on the received grain flow sensor signals,
to determine that the current load is above an upper threshold, and
to provide, based on the current load, a control signal for adjusting an aggressiveness setting of a threshing and separation section (16, 18, 20) of the combine harvester (10), wherein the adjusting of the aggressiveness setting of the threshing and separation section (16, 18, 20) of the combine harvester (10) comprises
reducing a rotational speed of a threshing drum (16), a beater (18) and/or a separation drum (20), and/or
increasing a threshing gap between the threshing drum (16) and a cooperating threshing grate (116) and/or a separation gap between the separation drum (20) and a cooperating separation grate (120).

11. A system (100) for controlling a combine harvester (10) as claimed in claim 10, wherein the grain flow sensors (210) comprise an impact sensor, a pressure sensor and/or a light based sensor.

12. A system (100) for controlling a combine harvester (10) as claimed in claim 10 or 11, further comprising a straw quality sensor (251, 252) provided above and/or adjacent to a rear end of the straw walker section (22), the controller (110) further being operatively coupled to the straw quality sensor (251, 252) for receiving a straw quality signal therefrom and being configured to adjust the aggressiveness setting of the threshing and separation section (16, 18, 20) based on a combination of the current load and the straw quality sensor (251, 252) signal.

13. A system (100) for controlling a combine harvester (10) as claimed in claim 12, wherein the straw quality sensor (251, 252) comprises a camera, an ultrasound sensor, a laser sensor and/or a radar sensor.

14. A system (100) for controlling a combine harvester (10) as claimed in any one of the claims 10-13, further comprising an unthreshed grain sensor (240), the controller (100) further being operatively coupled to the unthreshed grain sensor (240) for receiving an unthreshed grain signal therefrom and being configured to adjust the aggressiveness setting of the threshing and separation section (16, 18, 20) based on a combination of the current load and the unthreshed grain signal.

15. A combine harvester (10) comprising a threshing and separation section (16, 18, 20), a straw walker section (22) and a system (100) for controlling the combine harvester (10) as claimed in any one of the claims 10 to 14.

## Patentansprüche

1. Verfahren zum Steuern eines Mähdreschers (10), wobei das Verfahren folgende Schritte aufweist:
Empfangen von Kornfluss-Sensorsignalen von einer Mehrzahl von Kornfluss-Sensoren (210), die unterhalb und angrenzend zu einer Korntransferfläche eines Strohschüttlerabschnitts (22) des Mähdreschers (10) vorgesehen sind, wobei die Kornfluss-Sensoren (210) über eine Länge des Strohschüttlerabschnitts (22) verteilt sind,
Bestimmen einer aktuellen Last auf den Strohschüttlerabschnitt (22) basierend auf den empfangenen Kornfluss-Sensorsignalen, und
Einstellen einer Aggressivitätseinstellung eines Dresch- und Abscheideabschnitts (16, 18, 20) des Mähdreschers (10) basierend auf der aktuellen Last,
**dadurch gekennzeichnet, dass** das Verfahren des Weiteren folgende Schritte aufweist:
Bestimmen, dass die aktuelle Last über einem oberen Grenzwert liegt und wobei das Einstellen der Aggressivitätseinstellung des Dresch- und Abscheideabschnitts (16, 18, 20) des Mähdreschers (10) folgende Schritte aufweist:
Verringern einer Rotationsgeschwindigkeit einer Dreschtrommel (16), eines Schlegels (18) und/oder einer Abscheidetrommel (20), und/oder
Vergrößern eines Dreschspalts zwischen der Dreschtrommel (16) und einem zusammenwirkenden Dreschrost (116) and/oder eines Abscheidespalts zwischen der Abscheidetrommel (20) und einem zusammenwirkenden Abscheiderost (120).

2. Verfahren zum Steuern eines Mähdreschers (10) nach Anspruch 1, wobei das Bestimmen der aktuellen Last ein Bestimmen eines Kornflussprofils aufweist, das eine Veränderung der Kornfluss-Sensorsignale entlang der Länge des Strohschüttlerabschnitts (22) darstellt.

3. Verfahren zum Steuern eines Mähdreschers (10) nach Anspruch 1 oder 2, wobei das Einstellen der Aggressivitätseinstellung ein Einstellen einer Rotationsgeschwindigkeit einer Dreschtrommel (16), eines Schlegels (18) und/oder einer Abscheidetrommel (20) aufweist.

4. Verfahren zum Steuern eines Mähdreschers (10) nach einem der vorhergehenden Ansprüche, wobei das Einstellen der Aggressivitätseinstellung ein Einstellen eines Dreschspalts zwischen einer Dreschtrommel (16) und einem zusammenwirkenden Dreschrost (116) und/oder eines Abscheidespalts zwischen einer Abscheidetrommel (20) und einem zusammenwirkenden Abscheiderost (120) aufweist.

5. Verfahren zum Steuern eines Mähdreschers (10) nach einem der vorhergehenden Ansprüche, das des Weiteren ein Einstellen einer Geschwindigkeit und/oder Neigung des Strohschüttlerabschnitts (22) basierend auf der aktuellen Last aufweist.

6. Verfahren zum Steuern eines Mähdreschers (10) nach einem der vorhergehenden Ansprüche, das des Weiteren folgende Schritte aufweist:
Empfangen eines Strohqualitäts-Sensorsignals von einem Strohqualitäts-Sensor, der oberhalb von einem hinteren Ende und/oder angrenzend an ein hinteres Ende des Strohschüttlerabschnitts (22) vorgesehen ist,
Einstellen der Aggressivitätseinstellung des Dresch- und Abscheideabschnitts (16, 18, 20) basierend auf einer Kombination aus der aktuellen Last und dem Strohqualitäts-Sensorsignal.

7. Verfahren zum Steuern eines Mähdreschers (10) nach einem der vorhergehenden Ansprüche, das des Weiteren folgende Schritte aufweist:
Empfangen eines -Sensorsignals für nichtgedroschenes Korn von einem Sensor für nichtgedroschenes Korn,
Einstellen der Aggressivitätseinstellung des Dresch- und Abscheideabschnitts (16, 18, 20) basierend auf einer Kombination aus der aktuellen Last und dem Sensorsignals für nichtgedroschenes Korn.

8. Verfahren zum Steuern eines Mähdreschers (10) nach einem der vorhergehenden Ansprüche, das des Weiteren das Bestimmen aufweist, dass die aktuelle Last unter einem unteren Grenzwert liegt, und wobei das Einstellen der Aggressivitätseinstellung des Dresch- und Abscheideabschnitts (16, 18, 20) des Mähdreschers (10) des Weiteren folgende Schritte aufweist:
Steigern einer Rotationsgeschwindigkeit einer Dreschtrommel (16), eines Schlegels (18) und/oder einer Abscheidetrommel (20), und/oder
Reduzieren eines Dreschspalts zwischen der Dreschtrommel (16) und einem zusammenwirkenden Dreschrost (116) und/oder eines Abscheidespalts zwischen der Abscheidetrommel (20) und einem zusammenwirkenden Abscheiderost (120).

9. Verfahren zum Steuern eines Mähdreschers (10) nach einem der vorhergehenden Ansprüche, das des Weiteren folgende Schritte aufweist:
Bestimmen eines ersten aktuellen Lastniveaus,
Reduzieren der Aggressivitätseinstellung des Dresch- und Abscheideabschnitts (16, 18, 20),
Bestimmen eines zweiten aktuellen Lastniveaus,
Vergleichen des zweiten aktuellen Lastniveaus mit dem ersten aktuellen Lastniveau und
weiteres Reduzieren der Aggressivitätseinstellung des Dresch- und Abscheideabschnitts (16, 18, 20), wenn das zweite aktuelle Lastniveau im Wesentlichen kleiner als das erste aktuelle Lastniveau ist,
Beibehalten der Aggressivitätseinstellung des Dresch- und Abscheideabschnitts (16, 18, 20), wenn das zweite aktuelle Lastniveau im Wesentlichen gleich zu dem ersten aktuellen Lastniveau ist.

10. System (100) zum Steuern eines Mähdreschers (10), wobei das System aufweist:
Kornfluss-Sensoren (210), die unterhalb von und angrenzend zu einer Korntransferfläche eines Strohschüttlerabschnitts (22) des Mähdreschers (10) angeordnet sind, wobei die Kornfluss-Sensoren (210) über eine Länge des Strohschüttlerabschnitts (22) verteilt sind,
eine Steuereinheit (110), die wirkend mit den Kornfluss-Sensoren (210) zum Empfangen von Kornfluss-Sensorsignalen davon gekoppelt und die eingerichtet ist zum:
Bestimmen einer aktuellen Last auf den Strohschüttlerabschnitt (22) basierend auf den empfangenen Kornfluss-Sensorsignalen,
Bestimmen, dass die aktuelle Last über einem oberen Grenzwert liegt, und
Bereitstellen, basierend auf der aktuellen Last, eines Steuersignals zum Einstellen einer Aggressivitätseinstellung eines Dresch- und Abscheideabschnitts (16, 18, 20) des Mähdreschers (10), wobei das Einstellen der Aggressivitätseinstellung des Dresch- und Abscheideabschnitts (16, 18, 20) des Mähdreschers (10) folgende Schritte aufweist:
Reduzieren einer Rotationsgeschwindigkeit einer Dreschtrommel (16), eines Schlegels (18) und/oder einer Abscheidetrommel (20), und/oder Vergrößern eines Dreschspalts zwischen der Dreschtrommel (16) und einem zusammenwirkenden Dreschrost (116) und/oder eines Abscheidespalts zwischen der Abscheidetrommel (20) und einem zusammenwirkenden Abscheiderost (120).

11. System (100) zum Steuern eines Mähdreschers (10) nach Anspruch 10, wobei die Kornfluss-Sensoren (210) einen Stoßsensor, einen Drucksensor und/oder einen lichtbasierten Sensor aufweisen.

12. System (100) zum Steuern eines Mähdreschers (10) nach Anspruch 10 oder 11, das des Weiteren einen Strohqualitäts-Sensor (251, 252) aufweist, der oberhalbeines hinteren Endes und/oder angrenzend an ein hinteres Ende des Strohschüttlerabschnitts (22) vorgesehen ist, wobei die Steuereinheit (110) des Weiteren wirkend mit dem Strohqualitäts-Sensor (251, 252) gekoppelt ist, um ein Strohqualitätssignal davon zu empfangen, und dazu eingerichtet ist, die Aggressivitätseinstellung des Dresch- und Abscheideabschnitts (16, 18, 20) basierend auf einer Kombination aus der aktuellen Last und dem Strohqualitäts-Sensorsignale (251, 252) einzustellen.

13. System (100) zum Steuern eines Mähdreschers (10) nach Anspruch 12, wobei der Strohqualitäts-Sensor (251, 252) eine Kamera, einen Ultraschallsensor, einen Lasersensor und/oder einen Radarsensor aufweist.

14. System (100) zum Steuern eines Mähdreschers (10) nach einem der Ansprüche 10 bis 13, das des Weiteren einen Sensor (240) für nichtgedroschenes Korn aufweist, wobei die Steuereinheit (100) des Weiteren wirkend mit dem Sensor (240) für nichtgedroschenes Korn zum Empfangen eines Sensorsignals für nichtgedroschenes Korn davon gekoppelt und dazu eingerichtet ist, die Aggressivitätseinstellung des Dresch- und Abscheideabschnitts (16, 18, 20) basierend auf einer Kombination aus der aktuellen Last und dem Sensorsignals für nichtgedroschenes Korn einzustellen.

15. Mähdrescher (10) mit einem Dresch- und Abscheideabschnitt (16, 18, 20), einem Strohschüttlerabschnitt (22) und einem System (100) zum Steuern des Mähdreschers (10) nach einem der Ansprüche 10 bis 14.

## Revendications

1. Procédé de commande d'une moissonneuse-batteuse (10), le procédé comprenant :
la réception de signaux des capteurs de débit de grains provenant d'une pluralité de capteurs de débit de grains (210) situés en dessous et à proximité d'une surface de transfert de récolte d'une section de secoueurs (22) de la moissonneuse-batteuse (10), les capteurs de débit de grains (210) étant répartis sur une longueur de la section de secoueurs (22),
la détermination, à partir des signaux reçus du capteur de débit de grains, d'une charge actuelle sur la section de secoueurs (22), et
le réglage, en fonction de la charge actuelle, des paramètres d'agressivité d'une section de battage et de séparation (16, 18, 20) de la moissonneuse-batteuse (10),
**caractérisé en ce que** le procédé comprend également :
la détermination que la charge actuelle est supérieure à un seuil supérieur dans lequel le réglage des paramètres d'agressivité de la section de battage et de séparation (16, 18, 20) de la moissonneuse-batteuse (10) comprend
la réduction de la vitesse de rotation d'un tambour de battage (16), d'un batteur (18) et/ou d'un tambour de séparation (20) et/ou
l'augmentation de l'écart de battage entre le tambour de battage (16) et une grille de battage coopérante (116) et/ou un écart de séparation entre le tambour de séparation (20) et la grille de séparation coopérante (120).

2. Procédé de commande d'une moissonneuse-batteuse (10) selon la revendication 1, dans lequel la détermination de la charge actuelle consiste à déterminer un profil de débit de grains, représentant une variation des signaux du capteur de débit de grains sur la longueur de la section de secoueurs (22).

3. Procédé de commande d'une moissonneuse-batteuse (10) selon la revendication 1 ou 2, dans lequel le réglage des paramètres d'agressivité comprend le réglage de la vitesse de rotation d'un tambour de battage (16), d'un batteur (18) et/ou d'un tambour de séparation (20).

4. Procédé de commande d'une moissonneuse-batteuse (10) selon l'une quelconque des revendications précédentes, dans lequel le réglage des paramètres d'agressivité comprend le réglage d'un écart de battage entre un tambour de battage (16) et une grille de battage coopérante (116) et/ou un écart de séparation entre un tambour de séparation (20) et une grille de séparation coopérante (120).

5. Procédé de commande d'une moissonneuse-batteuse (10) selon l'une quelconque des revendications précédentes, comprenant également le réglage d'une vitesse et/ou d'une pente de la section de secoueurs (22) en fonction de la charge actuelle.

6. Procédé de commande d'une moissonneuse-batteuse (10) selon l'une quelconque des revendications précédentes, comprenant en outre :
la réception d'un signal du capteur relatif à la qualité de paille, provenant d'un capteur de qualité de paille disposé au-dessus et/ou à côté de l'extrémité arrière de la section de secoueurs (22),
le réglage des paramètres d'agressivité de la section de battage et de séparation (16, 18, 20) en fonction d'une combinaison de la charge actuelle et du signal du capteur relatif à la qualité de la paille.

7. Procédé de commande d'une moissonneuse-batteuse (10) selon l'une quelconque des revendications précédentes, comprenant en outre :
la réception d'un signal de capteur relatif aux grains non battus provenant d'un capteur de grains non battus,
le réglage des paramètres d'agressivité de la section de battage et de séparation (16, 18, 20) en fonction d'une combinaison de la charge actuelle et du signal du capteur relatif aux grains non battus.

8. Procédé de commande d'une moissonneuse-batteuse (10) selon l'une quelconque des revendications précédentes, comprenant en outre la détermination que la charge actuelle est inférieure à un seuil inférieur et dans laquelle le réglage des paramètres d'agressivité de la section de battage et de séparation (16, 18, 20) de la moissonneuse-batteuse (10) comprend
l'augmentation de la vitesse de rotation d'un tambour de battage (16), d'un batteur (18) et/ou d'un tambour de séparation (20) et/ou
la réduction d'un écart de battage entre le tambour de battage (16) et une grille de battage coopérante (116) et/ou un écart de séparation entre le tambour de séparation (20) et une grille de séparation coopérante (120).

9. Procédé de commande d'une moissonneuse-batteuse (10), telle que revendiquée dans l'une quelconque des revendications précédentes, comprenant également
la détermination d'un premier niveau de charge actuelle,
la réduction du réglage des paramètres d'agressivité de la section de battage et de séparation (16, 18, 20),
la détermination d'un second niveau de charge actuel,
la comparaison du second niveau de charge actuelle au premier niveau de charge actuelle et
la réduction supplémentaire du réglage des paramètres d'agressivité de la section de battage et de séparation (16, 18, 20) si le second niveau de charge actuelle est nettement inférieur au premier niveau de charge actuelle,
le maintien du réglage des paramètres d'agressivité de la section de battage et de séparation (16, 18, 20) si le second niveau de charge actuelle est sensiblement égal au premier niveau de charge actuelle.

10. Système (100) de commande d'une moissonneuse-batteuse (10), le système comprenant :
des capteurs de débit de grains (210) situés en dessous et à proximité d'une surface de transfert de récolte d'une section de secoueurs (22) de la moissonneuse-batteuse (10), les capteurs de débit de grains (210) étant répartis sur une longueur de la section de secoueurs (22),
un dispositif de commande (110), couplé de manière fonctionnelle aux capteurs de débit de grains (210) afin de recevoir les signaux des capteurs de débit de grains en provenance de ces capteurs, et configuré pour
déterminer une charge actuelle sur la section de secoueurs (22) en fonction des signaux reçus du capteur de débit de grains,
déterminer que la charge actuelle est supérieure à un seuil supérieur, et
fournir, en fonction de la charge actuelle, un signal de commande pour le réglage des paramètres d'agressivité d'une section de battage et de séparation (16, 18, 20) de la moissonneuse-batteuse (10), dans lequel le réglage des paramètres d'agressivité de la section de battage et de séparation (16, 18, 20) de la moissonneuse-batteuse (10) comprend
la réduction de la vitesse de rotation d'un tambour de battage (16), d'un batteur (18) et/ou d'un tambour de séparation (20) et/ou
l'augmentation de l'écart de battage entre le tambour de battage (16) et une grille de battage coopérante (116) et/ou un écart de séparation entre le tambour de séparation (20) et la grille de séparation coopérante (120).

11. Système (100) de commande d'une moissonneuse-batteuse (10) selon la revendication 10, dans lequel les capteurs de débit de grains (210) comprennent un capteur d'impact, un capteur de pression et/ou un capteur de lumière.

12. Système (100) de commande d'une moissonneuse-batteuse (10) selon la revendication 10 ou 11 comprenant en outre un capteur de qualité de paille (251, 252) disposé au-dessus et/ou de manière adjacente à une extrémité arrière de la section de secoueurs (22), le dispositif de commande (110) étant couplé de manière fonctionnelle au capteur de qualité de paille (251, 252) afin de recevoir un signal relatif à la qualité de la paille et étant configuré pour régler les paramètres d'agressivité de la section de battage et de séparation (16, 18, 20) en fonction d'une combinaison de la charge actuelle et du signal du capteur de qualité de la paille (251, 252).

13. Système (100) de commande d'une moissonneuse-batteuse (10) selon la revendication 12, dans lequel le capteur de qualité de la paille (251, 252) comprend une caméra, un capteur à ultrasons, un capteur laser et/ou un capteur radar.

14. Système (100) de commande d'une moissonneuse-batteuse (10) selon l'une quelconque des revendications 10 à 13, comprenant en outre un capteur de grains non battus (240), le dispositif de commande (100) étant en outre couplé au capteur de grains non battus (240) afin de recevoir un signal de grains non battus et étant configuré pour régler les paramètres d'agressivité de la section de battage et de séparation (16, 18, 20) en fonction d'une combinaison de la charge actuelle et du signal de grains non battus.

15. Moissonneuse-batteuse (10) comprenant une section de battage et de séparation (16, 18, 20), une section de secoueurs (22) et un système (100) de commande de la moissonneuse-batteuse (10), tel que revendiqué dans l'une quelconque des revendications 10 à 14.
